**Europäisches Patentamt**

**European Patent Office**

**Office européen des brevets**

(19)

(11) Veröffentlichungsnummer: **0 396 751**

**A1**

# EUROPÄISCHE PATENTANMELDUNG
## veröffentlicht nach Art. 158 Abs. 3
## EPÜ

(12)

(21) Anmeldenummer: **89901343.7**

(22) Anmeldetag: **28.10.88**

(86) Internationale Anmeldenummer:
**PCT/SU88/00215**

(87) Internationale Veröffentlichungsnummer:
**WO 90/04878 (03.05.90 90/10)**

(51) Int. Cl.⁵: **H02K 44/02**

(43) Veröffentlichungstag der Anmeldung:
**14.11.90 Patentblatt 90/46**

(84) Benannte Vertragsstaaten:
**AT BE CH DE FR GB IT LI LU NL SE**

(71) Anmelder: **VSESOJUZNY
NAUCHNO-ISSLEDOVATELSKY
PROEKTNO-KONSTRUKTORSKY I
TEKHNOLOGICHESKY INST.
ELEKTROSVAROCHNOGO OBORUDOVANIA
(VNIIESO)
ul. Litovskaja, 10
Leningrad, 194100(SU)**

(72) Erfinder: **BYKHOVSKY, David Grigorievich
ul. Esenina, 32-2-95
Leningrad, 194358(SU)**
Erfinder: **PANOV, Alexandr Nikolaevich
naberezhnaya Fontanki, 26-3
Leningrad, 191028(SU)**

(74) Vertreter: **Finck, Dieter
Patentanwälte v. Füner, Ebbinghaus, Finck
Mariahilfplatz 2 & 3
D-8000 München 90(DE)**

(54) **ANORDNUNG ZUM PUMPEN GESCHMOLZENER METALLE.**

(57) Die Vorrichtung zum Umpumpen des flüssigen Metalls enthält eine zentrifugale MHD- Konduktionspumpe (1) welche in einem Behälter (2) mit flüssigem Metall angeordnet wird und ein Metallgehäuse (3) hat, wobei an die Innenfläche des Deckels (4) dieses Metallgehäuses (3) mit seinem einen Ende ein Metallstab (6) angeschlossen ist, der von einer Solenoidspule (7) umgeben ist, und zwischen dem anderen Ende des Metallstabes (6) und dem Boden (5) des Metallgehäuses von diesen elektrisch isoliert und koaxial zum Metallstab (6) eine Arbeitskammer (8) angeordnet ist. Das Metallgehäuse (3) mit dem Deckel (4) und dem Boden (5) sowie der Metallstab (6), die Solenoidspule (7) und die Arbeitskammer (8) bilden ein geschlossenes Magnetsystem, wodurch im Hohlraum der Arbeitskammer (8) ein magnetisches Feld mit einem maximal möglichen Wert der magnetischen Induktion bei einem vorgegebenen Wert des Gleichstromes erzeugt wird, der durch die Solenoidspule (7) durchfließt. Die Arbeitskammer (8) steht mit dem mit flüssigem Metall gefüllten Behälter (2) in Verbindung und ist mit einem Stutzen zum Herausführen des flüssigen Metalls hermetisch verbunden.

FIG. 1

# VORRICHTUNG ZUM UMPUMPEN DES FLÜSSIGEN METALLS

## Gebiet der Technik

Die Erfindung bezieht sich auf das Hütten- und Giessereiwesen und betrifft insbesondere Vorrichtungen zum Umpumpen des flüssigen Metalls.

## Zugrundeliegender Stand der Technik

Es ist eine Vorrichtung zum Umpumpen des flüssigen Metalls (SU, A, 679783) bekannt, deren MHD-Pumpe ein zylinderförmiges Keramikgehäuse mit Doppelwänden enthält, zwischen welchen eine Solenoidspule angeordnet ist. Der Innenraum des Gehäuses ist mittels einer querverlaufenden Trennwand in einen Oberraum und einen Unterraum eingeteilt, wobei im mittleren Bereich der Trennwand eine Bohrung vorgesehen ist. Im Oberraum des Gehäuses ist eine Graphitelektrode untee Bildung eines Spaltes relativ zu der Trennwand angeordnet, wobei der von der querverlaufenden Trennwand und der Graphitelektrode begrenzte Raum eine Arbeitskammer der MHD-Pumpe bildet. Der Stutzen zum Herausführen des flüssigen Metalls ist in der Gehäusewand angebracht, und über den Unterraum und die Bohrung der Trennwand ist die Arbeitskammer mit einem Behälter mit flüssigem Metall verbunden.

Das Magnetfeld wird in der Arbeitskammer der MHD-Pumpe mittels der Solenoidspule erzeugt, die an eine Stromquelle angeschlossen ist. Das Umpumpen des flüssigen Metalls, mit welchem die Arbeitskammer gefüllt ist, wird durch eine Weckselwirkung zwischen dem elektrischem Strom, welcher durch das flüssige Metall durchfließt, und dem Magnetfeld, das durch die Solenoidspule erzeugt wird, gewährleistet.

Mit Rücksicht darauf, daß das Magnetsystem in einer solchen Vorrichtung als ein offenes Magnetsystem ausgebildet ist, und daß die magnetischen Induktionslinien über den Luftraum schließend sind, hat die Größe der magnetischen Induktion in der Arbeitskammer einen niedrigen Wert. Die Arbeitskammer einer solchen Vorrichtung ist undicht; deshalb ist der von der MHD-Pumpe erzeugte Metalldruck begrenzt.

Es ist eine Vorrichtung zum Umpumpen des flüssigen Metalls bekannt, in der das Metall mit Hilfe einer MHD-Pumpe bei dessen gleichzeitiger Erwärmung umgepumpt wird (SU, A, 649179). Die Vorrichtung enthält ein metallisches Gehäuse, in dem sich eine Arbeitskammer befindet, die mit einem Stutzen zum Herausführen des flüssigen Metalls gas- und luftdicht verbunden ist. Das Gehäuse besteht aus einem Werkstoff mit einer hohen magnetischen Leichtfähigkeit, bildet einen Teil eines Magnetsystems und ist an der Außenfläche mit einer Solenoidspule umgeben.

Das Umpumpen des die Arbeitskammer der genannten Vorrichtung füllenden flüssigen Metalls geschieht infolge der Wechselwirkung eines durch das flüssige Metall in der Arbeitskammer fliessenden elektrischen Stromes und eines durch die Solenoidspule erzeugten Magnetfeldes, bei dem der Vektor der magnetischen Induktion parallel zu der Längsachse der Kammer gerichtet ist.

Durch die aufgezählten Elemente des Magnetsystems der MHD-Pumpe wird jedoch der maximal erreichbare Wert der magnetischen Induktion in der Arbeitskammer nicht gewährleistet, da sich die Kraftlinien der magnetischen Induktion über die Luft schliessen, während die aus Stahl bestehende Gehäusewand das in der Arbeitskammer vorhandene Magnetfeld teilweise shuntet. Außerdem fließt ein Teil des durch die Arbeitskammer fließenden Arbeitsstromes durch die Stirnwand der Kammer, sondern nicht durch das flüssige Metall, wodurch der Wirkungsgrad der MHD-Pumpe beim Betrieb ebenfalls herabgesetzt wird.

Offenbarung der Erfindung

Der Erfindung liegt die Aufgabe zugrunde, eine Vorrichtung zum Umpumpen des flüssigen Metalls zu schaffen, in der die konstruktive Ausführung der Arbeitskammer der MHD-Pumpe und des Magnetsystems die Erzeugung eines maximal möglichen Druckes des flüssigen Metalls in der Arbeitskammer und im Stutzen zum Herausführen des flüssigen Metalls bei minimal möglichen Werten des durch die Arbeitskammer und die Solenoidspule des Magnetsystems fließenden elektrischen Stromes gewährleistet.

Die gestellte Aufgabe wird dadurch gelöst, daß in einer Vorrichtung zum Umpumpen des flüssigen Metalls, bei welcher die zentrifugale MHD-Konduktionspumpe ein Metallgehäuse mit einem Deckel, in welchem Metallgehäuse eine Arbeitskammer mit einem Stutzen zum Herausführen des flüssigen Metalls, welche mit einem Behälter mit flüssigem Metall verbunden ist, enthält sowie ein Magnetsystem, das ein Magnetfeld in dem die Arbeitskammer füllenden flüssigen Metall erzeugt, vorgesehen ist, erfindungsgemäß an die Innenfläche des Deckels des Metallgehäuses ein Metallstab mit seinem einen Ende angeschlossen ist, welcher Stab über die äußere Seitenfläche von einer Solenoidspule umgeben ist, während zwischen dem anderen Ende des Metallstabes und dem Boden des Metallgehäuses von diesen elektrisch isoliert und koaxial zu dem Metallstab eine Arbeitskammer angeordnet ist, wobei das Metallgehäuse mit dem Deckel und dem Boden, der Metallstab, die Solenoidspule und die Arbeitskammer ein Magnetsystem bilden, und im Boden des Metallgehäuses und in diesem Teil der Arbeitskammer Bohrungen vorgesehen sind, welche einen Kanal bilden, der den Hohlraum der Arbeitskammer mit dem mit flüssigem Metall gefüllten Behälter hermetisch verbindet.

Es ist zweckmäßig, daß die Arbeitskammer von einer koaxial zum Metallstab angeordneten zylinderförmigen Metallbuchse gebildet ist, die von der Seite der Stirnflächen durch Metallscheiben begrenzt ist, wobei in der Wand der zylinderförmigen Metallbuchse eine Bohrung ausgeführt werden muß, in der der Stutzen zum Herausführen des flüssigem Metalls hermetisch angeordnet ist, und in einer in der Nähe des Bodens des Metallgehäuses angebrachten Scheibe, eine Bohrung koaxial zu der Bohrung im Boden des Metallgehäuses vorgesehen ist.

Eine solche konstruktive Ausführung der zentrifugalen MHD-Konduktionspumpe der Vorrichtung gewährleistet die Schaffung eines geschlossen Magnetsystems, wodurch im Hohlraum der Arbeitskammer ein Magnetfeld mit einem maximal möglichen Wert der magnetischen Induktion bei einem vorgegebenen Wert des durch die Solenoidspule fliessenden elektrischen Stroms erzeugt wird.

Es ist wünschenswert, die zylinderförmige Metallbuchse der Arbeitskammer aus einem Werkstoff mit einer niedrigen magnetischen Leitfähigkeit und die Metallscheiben der Arbeitskammer aus einem Werkstoff mit einer hohen Magnetischen Leitfähigkeit aus.zuführen.

Bei der Ausführung der zylinderförmigen Buchse aus einem Werkstoff mit einer niedrigen magnetischen Leitfähigkeit wird eine Shuntung des magnetischen Flusses durch die zylinderförmige Buchse ausgeschlossen, während die Ausführung der Metallscheiben aus einem Werkstoff mit einer hohen magnetischen Leitfähigkeit zur Verminderung der Größe des Arbeitsluftspaltes des Magnetsystems beiträgt.

Es ist zweckmäßig, solche Innenfläche der Metallscheiben der Arbeitskammer, welche mit dem flüssigen Metall in Berührung stehen, mit einem Elektroisolationsüberzug auszuführen.

Dadurch wird es gewährleistet, daß der Gleichstrom über den Radius der Arbeitskammer genau senkrecht zu deren Längsachse fließt.

Um einen Durchfluß des Gleichstromes über die Metallscheibe der Arbeitskammer, welche Scheibe in der Nähe des Bodens des Metallgehäuses angeordnet ist, zu vermeiden, ist in dem von den Bohrungen der Metallscheibe der Arbeitskammer und des Bodens des Metallgehäuses gebildeten Kanal über eine Isolationszwischenlage eine Verbindungsbuchse anzubringen.

Kurze Beschreibung der Zeihnungen

Nachstehend wird die Erfindung anhand Ausführungsbeispiele unter Bezugnahme auf die beigefügte Zeichnungen erläutert. Es zeigen:

Fig. 1 - die Gesamtansicht einer erfindungsgemäßen
Vorrichtung zum Umpumpen des flüssigen Metalls im
Schnitt;

Fig. 2 - die Arbeitskammer einer erfindungsgemäßen
Vorrichtung zum Umpumpen des flüssigen Metalls;

Fig. 3 - Hauptvektoren, welche den Betrieb der zentrifugalen MHD-Konduktionspumpe kennzeichnen.

Bevorzugte Ausführungsvariante der Erfindung

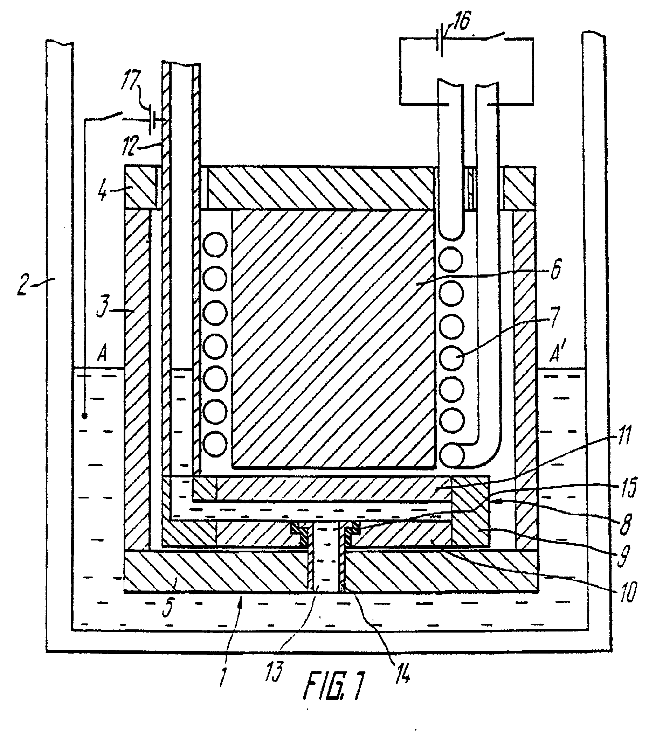

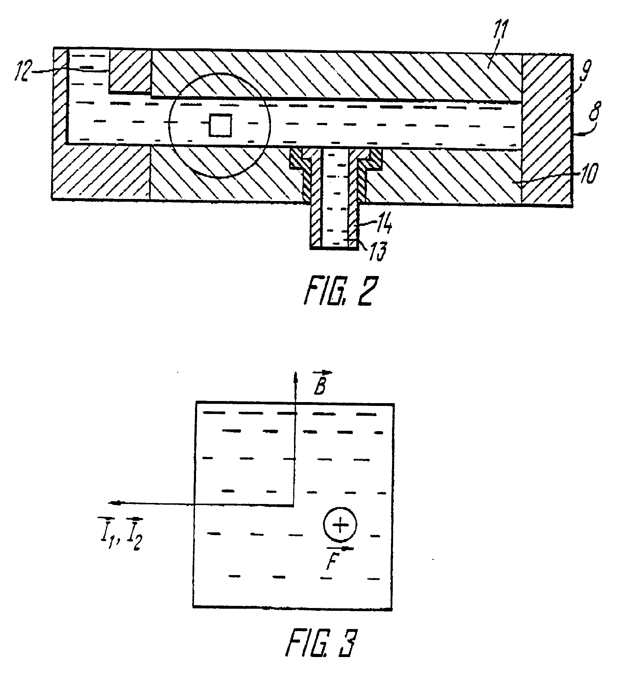

Die erfindungsgemäße Vorrichtung zum Umpumpen des
flüssigen Metalls enthält eine zentrifugale MHD-Konduktionspumpe 1 (Fig. 1), welche in einem Behälter 2 mit
flüssigem Metall angeordnet ist. Die zentrifugale MHD-
-Konduktionspumpe 1 enthält ein Metallgehäuse 3 mit einem
Deckel 4 und einem Boden 5. An die Innenfläche des
Deckels 4 ist mit seinem einen Ende ein Metallstab 6 angeschlossen, der über die äußere Seitenfläche von einer
Solenoidspule 7 (der Deckel 4 und der Stab 6 können als
ein Ganzteil hergestellt werden) umgeben ist. Zwischen
dem anderen Ende des Metallstabes 6 und dem Boden 5 des
Metallgehäuses 3 ist elektrisch isoliert von diesen und
koaxial zum Metallstab 6 eine Arbeitskammer 8 angeordnet.
Die Arbeitskammer 8 ist von einer zylinderförmigen Metallbuchse 9 gebildet, welche koaxial zum Metallstab 6 angeordnet, und seitens der Stirnflächen durch Metallscheiben 10 und 11 begrenzt ist. Vom Metallgehäuse 3 mit dem
Deckel 4 und dem Boden 5, von der Solenoidspule 7 und
der Arbeitskammer 8 wird ein geschlossenes System gebildet, wobei als dessen Arbeitsluftspalt der Innenraum der
Arbeitskammer 8 dient. In der Wand der zylinderförmigen
Metallbuchse 9 der Arbeitskammer 8 ist eine Bohrung ausgeführt, in der ein Stutzen 12 zum Herausführen des flüssigen Metalls hermetisch angeordnet ist, während in der Scheibe 10 der Arbeitskammer und im Boden 5 des Metallgehäuses 2 Bohrungen vorgesehen sind, welche einen Kanal 13 bilden, der mit dem mit flüssigem Metall gefüllten Behälter 2 hermetisch verbunden ist. Die hermetische Verbindung der Arbeitskammer 8 mit dem Behälter 2 kann dadurch erzielt werden, daß, z. B., im Kanal 13 eine Verbindungsbuchse 14 (Fig. 1, 2) angeordnet ist, die von der Scheibe 10 der Arbeitskammer durch eine Elektrosiolationszwischenlage 15 isoliert ist. Die zylinderförmige Metallbuchse 9 der Arbeitskammer 8 ist aus einem Werkstoff mit einer niedrigen magnetischen Leitfähigkeit ausgeführt, während die Metallscheiben 10 und 11 aus einem Werkstoff mit einer hohen magnetischen Leitfähigkeit hergestellt sind.

Auf die Innenfläche der Metallscheiben 10, 11 der Arbeitskammer 8, welche mit dem flüssigen Metall in Berührung stehen, ist ein Elektroisolationsüberzug aufgetragen, und der Elektroisolationsüberzug der Metallscheibe 10 ist mit der Elektroisolationszwischenlage 15 hermetisch verbunden.

Betrachten wir den Betrieb der Vorrichtung zum Umpumpen des flüssigen Metalls. Die zentrifugale MHD-Konduktionspumpe 1, welche in dem Behälter 2 so angeordnet ist, daß der Flüssigmetallspiegel AA' oberhalb der Arbeitskammer 8 liegt, wird an zwei Gleichstromquellen 16 und 17 angeschlossen. Die Anschlüsse der Gleichstromquelle 16 sind an die Anschlüsse der Solenoidspule 7 angeschlossen; der eine Anschluß der Gleichsstromquelle 17 ist an den Stutzen 12 zum Herausführen des flüssigen Metalls und der zweite Anschluß der Gleichstromquelle 17 an das flüssige Metall angeschlossen.

Beim Durchfluß des Gleichstromes $I_1$ von der Gleichstromquelle 16 über die Solenoidspule 7 wird zwischen den Metallscheiben 10 und 11 der Arbeitskammer 8 ein Magnetfeld erzeugt, dessen Induktionsvektor $\vec{B}$ parallel zur

Längsachse der Arbeitskammer 8 verläuft. Da die Metallscheiben 10 und 11 aus einem Werkstoff mit einer hohen magnetischen Leitfähigkeit hergestellt sind, bilden sie zusammen mit dem Gehäuse 3, dem Deckel 4, dem Boden 5 und dem Stab 6 ein geschlossenes Magnetsystem, das einen maximal möglichen Wert der magnetischen Induktion $\vec{B}$ bei einem vorgegebenen Wert des durch die Solenoidspule 7 fließenden Stromes $I_1$ gewährleistet.

Beim Einschalten der Gleichstromquelle 17 fließt zwischen dem Stutzen 12 zum Herausführen des flüssigen Metalls und dem im Behälter 2 befindlichen flüssigen Metall ein Strom $\vec{I_2}$ über folgenden Weg: flüssiges Metall im Behälter 2 - flüssiges Metall im Kanal 13 - flüssiges Metall im Hohlraum der Arbeitskammer 8 - zylinderförmige Buchse 9. Die Elektroisolationszwischenlage 15 und der an den Innenflächen der Metallscheiben 10 und 11 vorge-sehene Elektroisolationsüberzug sorgen dafür, daß der Strom $\vec{I_2}$ über den Radius der Arbeitskammer 8 senkrecht zur Längsachse gerichtet ist. Bei einer Wechselwirkung zwischen dem Strom $\vec{I_2}$ (siehe Fig. 2, 3) und dem magnetischen Feld mit einem Vektor $\vec{B}$ wirkt auf das flüssige Metall in der Arbeitskammer 8 eine Kraft $\vec{F}$ ein, die senkrecht zur Ebene der Zeichnung gerichtet ist. Unter Einwirkung der Kraft $\vec{F}$ fängt das in der Arbeitskammer 8 befindliche flüssige Metall an, sich zu drehen, wodurch zwischen dem Kanal 13 und dem Stutzen 12 zum Herausführen des flüssigen Metalls ein Druckgefälle (ähnlich wie in einer herkömmlichen Zentrifugalpumpe) erzeugt und das flüssige Metall in Richtung vom Kanal 13 zum Stutzen 12 zum Herausführen des flüssigen Metalls hin umgepumpt wird.

Auf diese Weise wird durch von der erfindungsgemäßen Vorrichtung zum Umpumpen des flüssigen Metalls infolge der konstruktiven Ausführung der zentrifugalen MHD-Konduktionspumpe die Schaffung eines geschlossenen Magnetsystems gewährleistet, wodurch im Hohlraum der Arbeitskammer ein Magnetfeld mit einem maximal möglichen Wert der magnetischen Induktion bei einem vorgegebenen Wert des durch die Solenoidspule fließenden Gleichstromes erzeugt wird.

Die vorliegende konstruktive Ausführung der Arbeitskammer schließt eine Shuntung des magnetischen Flusses durch die zylinderförmige Buchse aus, vermindert die Größe des Arbeitsluftspaltes des Magnetsystems, wodurch auch der Betrieb des Magnetsystems verbessert wird; der Elektroisolationsüberzug der Metallscheiben der Arbeitskammer gewährleistet dabei eine genau vorgegebene Richtung des fließenden Gleichstromes.

Industrielle Anwendbarkeit

Die vorliegende Vorrichtung kann zum Umpumpen flüssiger Metalle aus Öfen, Elektrolysebädern und anderen Gefässen sowie zum Füllen von Gießformen ihre Anwendung finden.

PATENTANSPRÜCHE

1. Vorrichtung zum Umpumpen des flüssigen Metalls, bei welcher die zentrifugale MHD- Konduktionspumpe (1) ein Metallgehäuse (3) mit einem Deckel (4) in welchem Metallgehäuse (3) eine Arbeitskammer (8) mit einem Stutzen (12) zum Herausführen des flüssigen Metalls, welche mit einem Behälter (2) mit flüssigem Metall verbunden ist, enthält sowie ein Magnetsystem, das ein Magnetfeld in dem die Arbeitskammer (8) füllenden flüssigen Metall erzeugt, vorgesehen ist, dadurch gekennzeichnet, daß an die Innenfläche des Deckels (4) des Metallsgehäuses (3) ein Metallstab (6) mit seinem einen Ende angeschlossen ist, welcher Stab über die äußere Seitenfläche von einer Solenoidspule (7) umgeben ist, während zwischen dem anderen Ende des Metallstabes (6) und dem Boden (5) des Metallgehäuses (3) von diesen elektrisch isoliert und koaxial zu dem Metallstab (6) eine Arbeitskammer (8) angeordnet ist, wobei das Metallgehäuse (3) mit dem Deckel (4) und dem Boden (5), der Metallstab (6), die Solenoidspule (7) und die Arbeitskammer (8) ein Magnetsystem bilden, und im Boden (5) des Metallgehäuses (3) und in diesem Teil der Arbeitskammer (8) Bohrungen vorgesehen sind, welche einen Kanal (13) bilden, der den Hohlraum der Arbeitskammer (8) mit dem mit flüssigem Metall gefüllten Behälter (12) hermetisch verbindet.

2. Vorrichtung zum Umpumpen des flüssigen Metalls nach Anspruch 1, dadurch g e k e n n z e i c h n e t, daß die Arbeitskammer (8) von einer koaxial zum Metallstab (6) angeordneten zylinderförmiger Metallbuchse (9) gebildet ist, die seitens der Stirnflächen durch Metallscheiben (10, 11) begrenzt ist, wobei in der Wand der zylinderförmigen Metallbuchse (9) eine Bohrung ausgeführt ist, in der ein Stutzen (12) zum Herausführen des flüssigen Metalls hermetisch angeordnet ist, und in der Scheibe (10), welche in der Nähe des Bodens (5) des Metallgehäuses (3) angeordnet ist, eine Bohrung koaxial zu der Bohrung des Bodens des Metallgehäuses (3) ausgeführt ist.

3. Vorrichtung zum Umpumpen des flüssigen Metalls nach Anspruch 2, dadurch g e k e n n z e i c h n e t , daß die zylinderförmige Metallbuchse (9) der Arbeitskammer aus einem Werkstoff mit einer niedrigen magnetischen Leitfähigkeit die Metallscheiben (10, 11) der Arbeitskammer (8) aus einem Werkstoff mit einer hohen magnetischen Leitfähigkeit hergestellt sind.

4. Vorrichtung zum Umpumpen des flüssigen Metalls nach Anspruch 3, dadurch g e k e n n z e i c h n e t , daß die Innenfläche der Metallscheiben (10, 11) der Arbeitskammer (8), welche mit dem flüssigen Metall in Berührung stehen, mit einem Elektroisolationsüberzug ausgeführt sind.

5. Vorrichtung zum Umpumpen des flüssigen Metalls nach Anspruch 2, dadurch g e k e n n z e i c h n e t , daß im Kanal (13), der von den Bohrungen der Metallscheibe (10) der Arbeitskammer (8) und des Bodens (5) des Metallgehäuses (3) gebildet ist, über eine Isolationszwischenlage (15) eine Verbindungsbuchse (14) angebracht ist.

FIG. 1

FIG. 2

FIG. 3

# INTERNATIONAL SEARCH REPORT

International Application No **PCT/SU 88/00215**

## I. CLASSIFICATION OF SUBJECT MATTER (if several classification symbols apply, indicate all) *

According to International Patent Classification (IPC) or to both National Classification and IPC

IPC $^4$:    H 02 K 44/02

## II. FIELDS SEARCHED

### Minimum Documentation Searched [7]

| Classification System | Classification Symbols |
|---|---|
| IPC $^4$: | H 02 K 44/02, F 27 D 3/15, B 22 D 11/10, H 02 K 44/04, 44/06 |

Documentation Searched other than Minimum Documentation
to the Extent that such Documents are Included in the Fields Searched [8]

## III. DOCUMENTS CONSIDERED TO BE RELEVANT [9]

| Category * | Citation of Document, [11] with indication, where appropriate, of the relevant passages [12] | Relevant to Claim No. [13] |
|---|---|---|
| A | SU, A1, 570173, (D.G. Bykhovsky), 12 October 1977 | 1 |
| A | SU, A1, 679783, (D.G. Bykhovsky et al.), 18 August 1979 | 1 |
| A | SU, A1, 900781, (L.I. Charykov et al.), 23 March 1987 | 1 |
| A | WO, A1, 86/01051, (L.I. Charykov et al.), 13 February 1986<br><br>      & FR, A1, 2572867, 09.05.86<br>        GB, A, 2171261, 20.08.86 | 1 |

* Special categories of cited documents: [10]

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art.

"&" document member of the same patent family

## IV. CERTIFICATION

| Date of the Actual Completion of the International Search | Date of Mailing of this International Search Report |
|---|---|
| 22 June 1989 (22.06.89) | 24 July 1989 (24.07.89) |

| International Searching Authority | Signature of Authorized Officer |
|---|---|
| ISA/SU | |

Form PCT/ISA/210 (second sheet) (January 1985)